# EUROPEAN PATENT APPLICATION

(11) **EP 3 195 727 A1**
(43) Date of publication of application: **26.07.2017**
(21) Application number: 16152463.2
(22) Date of filing: 22.01.2016
(51) Int. Cl.: A01N 25/12, A01N 63/04, C12N 15/81

(54) **DUDDINGTONIA FLAGRANS STRAIN AND FEED ADDITIVE FORMULATION FOR BIOLOGICAL PEST CONTROL**

(71) Applicant: Forschungsinstitut Fur Biologischen Landbau (FiBL), 5070 Frick (CH)
(72) Inventor: Heckendorn, Felix, 4024 Basel (CH); Oberhänsli, Thomas, 4412 Nuglar SO (CH)
(74) Representative: Schneiter, Sorin

(57) **Abstract**

The present invention generally concerns the biological control of gastrointestinal nematode infections in grazing mammals. The invention provides *Duddingtonia flagrans* strains that are useful for reducing the parasitic nematode populations in feces of the mammals deposited on grassland. The invention also concerns a method for selecting *D. flagrans* strains exhibiting improved nematode capturing properties. In some aspects, the invention concerns a feed additive formulation comprising a *D. flagrans* strain for oral administration to grazing mammals for biologically reducing the spread of infective nematodes on grassland.

## Description

### Technical Field

The present invention relates to new strains of *Duddingtonia flagrans,* to tools and methods for identifying a *D. flagrans* strain, to formulations and/or feed additives useful in the control of nematode parasites of grazing mammals, to methods for producing the formulations and/or feed additive, and to a method for cultivating and selecting *D. flagrans* strains having desired nematophagous properties.

### Background Art and Problems Solved by the Invention

EP 0 603 315 discloses a process for the selection and isolation of nematophagous fungi that are useful as biological control agents against infective larvae of parasitic nematodes of ruminants such as *Ostertagia ostertagi,* and *Cooperia oncophora* (Strongylida, Trichostron-gyloidea) or *Strongylus vulgaris* and cyathostomins (Strongylidae) in horses.

*Ostertagia ostertagi,* for example, known as the brown stomach worm, infests cattle. Infective third-stage larvae (L₃) migrate onto herbage, where they are ingested by grazing cattle. The larvae develop in the gastrointestinal tract, in particular in the gastric glands. The adult parasite emerges from the glands onto the surface of the abomasal mucosa where it produces eggs, which are released to the environment via the feces. In the dung pat, the eggs develop to first-stage larvae (L₁), moult to become second-stage larvae (L₂), which in turn develop and moult to the third and infective stage (L₃). The latter migrate under moist conditions onto the herbage, ready for being ingested by grazing cattle.

Cattle infected with *O*. *ostertagi* generally suffer from appetite loss, weight loss and diarrhea. In some cases, disease progression may lead to death. All in all, gastrointestinal helminth infections result in important production losses to farmers.

Anthelmintics of synthetic origin can be used to treat gastrointestinal helminth infections.

In the frame of biological pest control, nematophagous fungi have been shown to be effective in killing nematode larvae that are developing in the feces on pasture. M. Pelloille, IOBC/WPRS Bulletin XIV/2 (1991), describes *Duddingtonia flagrans* strains that were found to be potentially useful as biological control agents. It has actually been known for some time that a number of microfungi develop under similar, moist conditions in the feces, and produce hyphae comprising nematode trapping structures with sticky nets consisting of three arcs. The body of a nematode larva retained in the trapping structure is penetrated by trophic hyphae, which grow and eventually kill the nematode, whose organs are absorbed by the fungus.

EP 0 603 315 discloses a multi-step selection procedure for selecting and isolating microfungi that are suitable for oral administration to domestic animals. The selection procedure comprises exposing a sample of fungi to diluted rumen fluid, and to test solutions comprising synthetic saliva, ruminal fluid, a pepsin-HCl solution, and a trypsin solution. Two fungal strains selected on the basis of the method are the *D. flagrans* strains deposited under numbers DSM 6703 and DSM 6704. The rationale of this selection test is based on the idea that many strains of nematophagous fungi may not survive passage through the gastrointestinal tract of domestic animals and are thus not effective as a pest control when administered orally. Accordingly, the selection conditions are chosen so as to resemble those of the alimentary tract of domestic animals and in particular ruminants. One of the shortcomings of this selection process is that it does not select fungi having particular predacious qualities. Indeed, while the selected strains may survive passage through the alimentary tract, they may not be efficient in killing nematodes in the feces. Furthermore, EP 0 603 315 does not disclose any particular formulation that can be administered to grazing animals.

In view of the current knowledge, it is an objective of the invention to provide nematophagous fungal strains that have improved nematode trapping properties. In particular, it is an objective to provide a fungal strain that produces a high number of trapping structures and/or that has highly nematophagous properties. Indeed, nematodes are not the only substrate allowing the growth of such fungi, and it is thus desirable to provide strains that are effective in using nematodes as a substrate for growth.

Another objective of the present invention is to provide a formulation comprising nematophagous fungi that is suitable for administration to grazing mammals, and which allows the passing of the fungus through the gastrointestinal tract and growing in/on the excrements. It is noted that grazing mammals are selective when taking up food. A formulation containing the fungus should be sufficiently appetizing for the mammal to be consumed voluntarily. Furthermore, the present invention seeks to provide a formulation which can be used as an additive to concentrated feed, and which can also be administered as such. Regarding the use of the formulation as a feed additive, an important factor to keep in mind is the granularity and density. The present invention seeks to provide a granulated formulation, which is well miscible with typical concentrated feed. In particular, it is an objective of the invention to avoid segregation of the formulation within containers of concentrated feed. In particular, the separation of particles comprising the fungus from the remainder of the concentrated feed is to be avoided.

The present invention addresses the problems depicted above. Further problems addressed by the invention will become apparent from the description of the invention and preferred embodiment herein below.

### Summary of the Invention

Remarkably, the present inventors provide new strains of *Duddingtonia flagrans* that are useful as biological agents for combatting the spread of gastrointestinal nematode parasites of ruminants. The inventors also provide new formulations and particulate delivery systems containing *D. flagrans.* Furthermore, the invention provides markers and/or probes that are suitable for identifying the strains of the invention, methods for selecting strains producing an increased number of trapping structures and methods for producing particulate delivery vehicles containing one or more *D. flagrans* strains.

In an aspect, the invention provides a *D. flagrans* strain which, when grown on solid substrate poor in nutrients for 11-14 days at 22°C, produces trapping structures.

In an aspect, the invention provides a *D. flagrans* strain comprising DNA comprising a sequence selected from any one of SEQ ID NOs 1 to 9 and 11 to 18, preferably any one of SEQ ID NOs 1 to 5, and most preferably SEQ ID NO: 1.

In an aspect, the invention provides a method for selecting nematophagous fungal strains having improved nematode trapping properties, the method comprising: inoculating a medium poor in nutrients with a nematophagous fungal strain; cultivating the inoculated medium at a temperature conducive for growth of fungal mycelium for a time sufficient for the production of trapping structures by the fungus; selecting fungal strains on the basis of the number of trapping structures or on the number of trapping rings formed by the fungus on the medium poor in nutrients. In an aspect, the invention provides a fungal strain selected in accordance with the method of the invention.

In an aspect, the invention provides a *D. flagrans* strain comprising DNA which can be probed with a probe comprising any one or more of the nucleotide sequences selected from the group consisting of SEQ ID NO: 37, SEQ ID NOs: 41-49, CGATG, CCGATG, CGATGG, CCGATGG, GCCGATG, GCCGATGG, GCCGATGGA, AGCCGATG, AGCCGATGG, AAGCCGATG, and nucleotide sequences that are complementary to the aforementioned sequences, under conditions conducive to binding of a nucleotide probe.

In an aspect, the invention provides a *D. flagrans* strain comprising DNA, which does not bind to a probe comprising the nucleotide sequence of SEQ ID NO: 38, under conditions conducive to binding of a nucleotide probe. For example, said DNA does not bind the probe comprising the nucleotide sequence of SEQ ID NO: 38 under conditions which are such that a probe comprising a nucleotide sequence selected from the group of any one of SEQ ID NO: 37 and 41-49 would bind to said DNA.

In an aspect, the invention provides the *D. flagrans* strain deposited under deposit number CBS 138751.

In another aspect, the invention provides a probe and/or primers suitable for identifying the *D. flagrans* strain of the invention.

In other aspects, the invention provides the use of a probe and/or of primers for identifying a *D. flagrans* strain, and a method for identifying the *D. flagrans* by exposing the DNA nucleotide sequence to a probe.

In an aspect, the invention provides a granulate formulation for oral administration to grazing mammals, the formulation comprising *D. flagrans* biomass obtained by cultivating *D. flagrans* on a granulate organic material, preferably based on cereal grains, a filling material, and, optionally, a binder.

In an aspect, the invention provides a feed, in particular a concentrated feed, supplemented with the granulate formulation of the invention.

In an aspect, the invention provides a method for producing a granulate formulation for oral administration to grazing mammals, the method comprising the steps of: cultivating *D*. *flagrans* on a granulate organic material, preferably based on cereal grains, so as to obtain biomass comprising fermented organic material intermingled with mycelium of the *D*. *flagrans* fungus; optionally, exposing the biomass obtained in the preceding step to a drying step so as to reduce the water content of the biomass; mixing the biomass with at least one filling material; pressing a mixture comprising the filling material and the optionally dried biomass to pellets. In an aspect, the invention provides a granulate formulation obtained by the method of the invention.

In an aspect, the invention provides the use of the formulation of the invention for controlling the parasitic nematode populations in excrements of grazing mammals.

In an aspect, the invention provides the use of the formulation of the invention as a biological control agent for combating gastrointestinal nematode parasites of grazing mammals.

In an aspect, the invention provides the use of a medium poor in nutrients, such as water agar, for selecting *D. flagrans* strains having improved nematode trapping properties and/or having improved producing an increased number of trapping structures.

Further aspects and preferred embodiments of the invention are defined herein below and in the appended claims.

Additional features and further advantages of the invention will become apparent to the skilled person from the description of the preferred embodiments given below.

### Brief Description of the Drawings

**Figure 1** schematically shows the segmentation of a petri dish that may be used in accordance with an embodiment of the method for selecting *D. flagrans* strains.
**Figure 2** **A** is a photograph taken through a stereomicroscope and showing the growth of a *D*. *flagrans* strain in accordance with an embodiment of the invention.

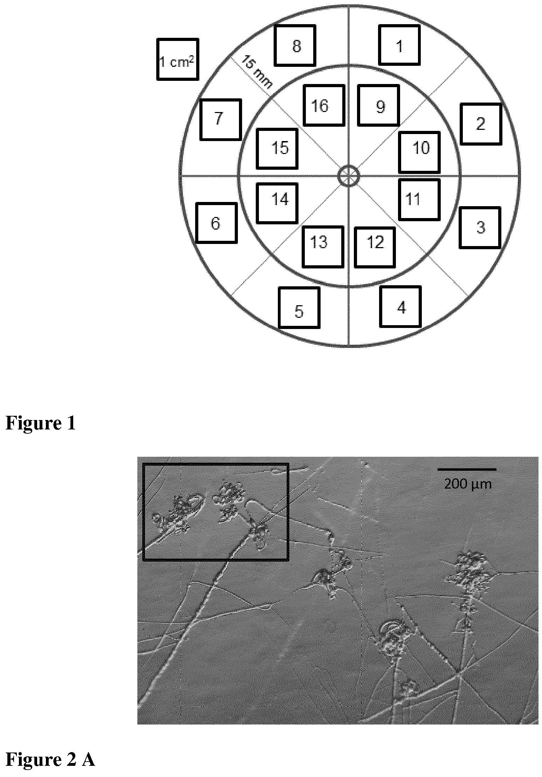

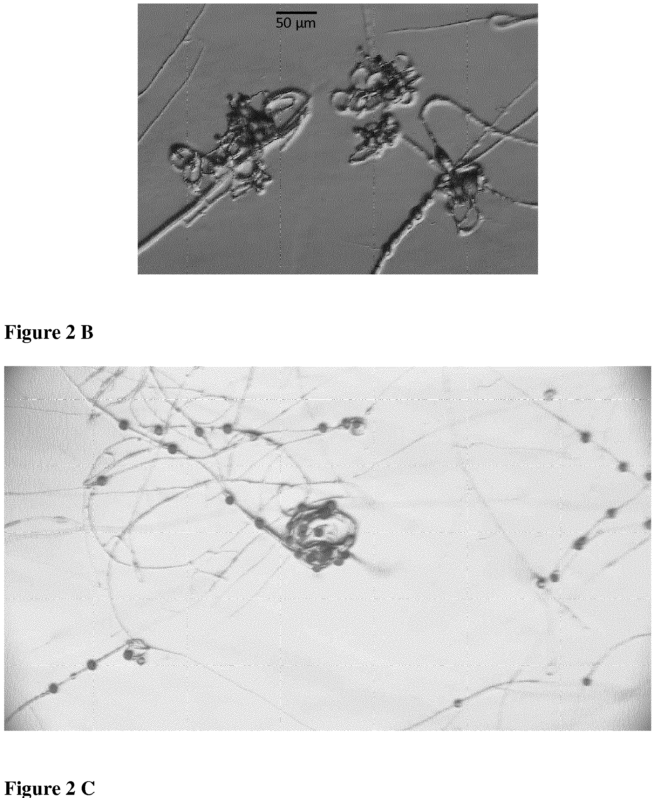

**Figure 2** **B** is an enlarged view of the area shown in the box in Figure 2 A.
**Figure 2C** is a photograph taken through a stereomicroscope and showing the growth of a *D*. ***flagrans*** strain that has been previously reported.

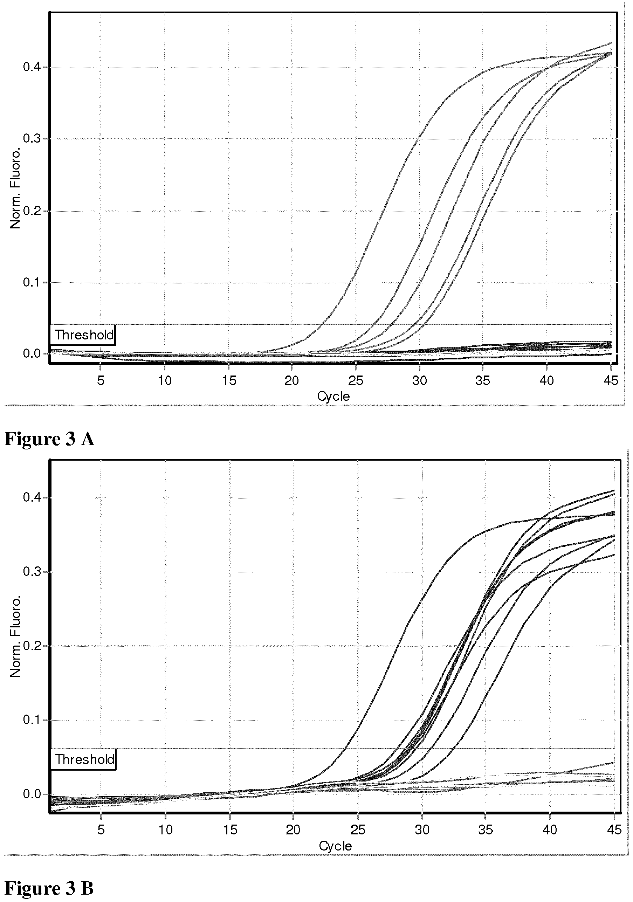

**Figures 3** **A and 3 B** show the result of a TaqMan assay conducted for identifying a *D*. *flagrans* strain in accordance with an embodiment of the invention (Figure 3 A) and distinguishing it from prior art strains (Figure 3 B).

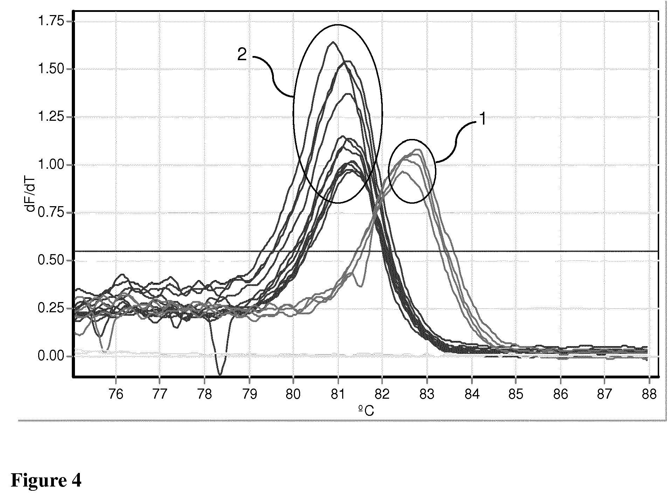

**Figure 4** show the result of a High Resolution Melt (HRM) analysis conducted for identifying a *D. flagrans* strain in accordance with an embodiment of the invention (red curves, the group with peak on the right side marked " 1") and for distinguishing the strain from prior art strains (blue curves, the group with peak on the left side marked "2").

### Detailed Description of the Preferred Embodiments

In some embodiments, the present invention relates to new *Duddingtonia flagrans* strains (hereinafter: *D. flagrans*). *Duddingtonia* is a genus of fungi of the family Orbiliaceae of which only the species *D. flagrans* is presently known. *D. flagrans* is also known under the names *Arthrobotrys flagrans* and *Trichothecium flagrans.* Under current systematics, *D. flagrans* belongs to the order Helotiales and the class Leotiomycetes.

The *D. flagrans* strains of the present invention preferably exhibit a phenotype that distinguishes the new strains from previously reported strains. One very apparent characteristic of the phenotype of the strains in accordance with the invention is the unusually high number of trapping structures produced by the strains.

A "trapping structure", also referred to as a "trapping net" produced by a *D. flagrans* strain is generally characterized by the occurrence of three characteristic rings, which can be readily recognized by stereo microscopy, for example at a 150x magnification. For the purpose of the present specification, the term "the phenotype" generally refers to the phenotype of producing a high number of trapping structures, preferably as defined in accordance with the embodiments of the present invention.

The phenotype of the new strains may become apparent when the strain is grown on a substrate poor in nutrients. Preferably, the strain is grown on a solid substrate poor in nutrients. A substrate poor in nutrients is preferably a substrate in which macro- and/or micronutrients that can be metabolized by the fungus are absent and/or in which there is lack of such macro- and/or micronutrients. Preferably, the strain is grown under conditions that are, with the exception of said macro- and/or micronutrients, conducive for growth of *D. flagrans* strains. In particular, macro- and/or micronutrient poor conditions are preferably conditions, which, in terms of temperature, oxygen presence and humidity, are conducive to the growth of *D. flagrans* strains.

The phenotype becomes generally apparent when growing the strain on a substrate that is poor in nutrients, or which does not contain any nutrients or only very small amounts of nutrients, such as residual nutrients originating from the inoculating sample. The phenotype becomes apparent, for example, when the strain is grown for 10-15 days, preferably 11-14 days, more preferably 12-13 days on solid substrate that is poor in nutrients, in particular poor in macro- and/or micronutrients.

The expression "substrate poor in nutrients" does not totally exclude the presence of nutrients. In particular, nutrients may be present due to the inoculation of a medium in which nutrients are completely absent with a pre-cultivation medium comprising the fungal inoculate. Together with the inoculating sample, nutrients may thus diffuse to said "substrate poor in nutrients". The expression "nutrient depleted medium" may also be used in this specification for referring to said "substrate poor in nutrients".

In an embodiment, a disk of 5 mm diameter and 3.6 mm height of PDA (potato dextrose agar, Cat. No. X931, Carl Roth GmbH, Karlsruhe, Germany) was used for inoculating the substrate poor in nutrients. This PDA contains 4 g potato infusion (equivalent to 200 g potatoes of classic PDA medium) and 20 g dextrose per Liter. A "substrate poor in nutrients" for the purpose of the present specification is a medium, which may contain a 250 times or more dilution of PDA as defined herein. In an embodiment, a "substrate poor in nutrients" is thus a medium which comprises 250 times lower nutrient concentration than the pre-cultivation medium such as PDA. Preferably, said nutrient concentration in said "nutrient depleted medium" is 270 times, preferably 290 times, more preferably 300 times lower than in said pre-cultivation medium.

It is noted that the inoculation of water agar, for example, with a pre-cultivating medium, may result in a non-homogenous distribution of nutrients within said "substrate poor in nutrients". For example, in accordance with the example and embodiments provided further below, if the center of a petri dish is inoculated, a gradient of nutrients will establish itself by way of diffusion, with highest concentration in the center of the petri dish. This gradient from the center to the outside will gradually disappear with time, as diffusion continues.

In an embodiment, the substrate poor in nutrients is an agar substrate. Preferably, the agar substrate is prepared without the addition of nutrients, in particular without the addition of macro- and/or micronutrients. Such a substrate is also referred to herein as "water agar".

A preferred example of a solid substrate poor in nutrients is water agar, which is preferably prepared using agar and water. Preferably, the water is pure and/or distilled water. Preferably, no macronutrient and/or no micronutrients are added when preparing the water agar used cultivating a particular *D. flagrans* strain. In a preferred embodiment, water agar is 1.6% w/v water agar (obtained by adding pure water to 16g agar so as to obtain a volume of 1 L altogether).

The temperature for growing *D. flagrans* strains is generally in the range of 20-25°C, preferably 21-24°C, for example 22°C.

The humidity of the environment for growing the *D. flagrans* strain is preferably such that drying of the solid medium is prevented. A relative humidity favoring growth of mycelium is preferably in the range of 50-100%, preferably 55-97%, more preferably 60-90%, most preferably 70-85%.

The present invention also provides a method for selecting *D. flagrans* strains exhibiting the phenotype of the strains accordance with the invention. The method of culturing the phenotype strains for revealing the strains phenotype may also be used for selecting strains in accordance with the present invention.

The phenotype generally becomes apparent 10-15 days after cultivating a *D. flagrans* strain on a solid substrate poor in nutrients, such as water agar at 20-23°C, preferably 22°C. After that time period, the strains of the invention produce trapping structures at high numbers, whereas "wild type" strains or strains that have been reported previously do actually produce very few or no trapping structures at all. Clusters containing the trapping structures are well visible, even by eye, in the period from day 11 up to day 15 from the start of culturing a strain. After 15 days, the formation of spores (chlamydospores) may render the numerical analysis of the number of trapping structures more difficult.

*D. flagrans* strains may be cultivated in covered petri dishes placed in an incubator. The petri dishes may be placed in a box that is pervious to air, such that dehydration of the substrate is avoided and humidity is maintained in a range that favors fungal growth, in particular the formation of fungal mycelium.

In a preferred embodiment, the protocol for determining the number of trapping structures encompasses placing an agar plug of 5 mm diameter, 3.6 mm height of a pre-culture of *D*. *flagrans* (on PDA) in the center of a solid substrate poor in nutrients, such as water agar, and cultivating the strain at 22°C for 13 days, and determining the number of trapping structures as specified elsewhere in this specification, for example in the examples further below.

Under conditions where nutrients are absent or very scarce, such as provided by a water agar, previously reported strains generally produce no or only very few trapping structures. For distinguishing strains exhibiting the phenotype of the invention in a clear and standardized manner from previously reported strains, a particular evaluation and/or selection protocol is described. In accordance with this protocol, several areas of the size of 1 cm² on a solid substrate are screened for the presence of trapping structures, the number of trapping structures is assessed, and the average number and the standard deviation of the trapping structures are determined. The trapping structures are generally produced on or above the surface of the solid substrate, where they can be recognized by stereo microscopic inspection.

In an embodiment, the *D. flagrans* strain of the invention produces on average three (3) or more trapping structures per cm² of substrate surface. This applies preferably when the *D*. *flagrans* strain is grown in a petri dish of 8.6 cm diameter containing 20 ml of 1.6wt.% water agar.

In another embodiment, the *D. flagrans* strain of the invention produces on average five (5) or more trapping structures per cm² of substrate surface. This applies preferably when the *D*. *flagrans* strain is grown in a petri dish of 8.6 cm diameter containing 20 ml of 1.6wt.% water agar.

In a preferred embodiment, the *D. flagrans* strain of the invention produces on average 10, 20, 30, 40, 50, 60, 70, 80, 90, 100, 110 or more trapping structures per cm² of substrate surface. This applies preferably when the *D. flagrans* strain is grown in a petri dish of 8.6 cm diameter containing 20 ml of 1.6wt.% water agar.

Preferably, the areas of 1 cm² to be analyzed for determining the average number of trapping structures are taken from a peripheral part of the petri dish in which the strain is cultivated. Preferably, the peripheral part is the peripheral annulus of 1.5 cm radius or thickness. **Figure 1** illustrates a petri dish on which a fungal strain may be cultivated on solid substrate poor in nutrients. The peripheral annulus of 1.5 cm thickness corresponds to the annulus obtained by removing the central circle of 7.1 cm of a petri dish having a radius of 8.6 cm.

In the peripheral annulus shown in Figure 1, eight (8) areas of 1cm² each are defined. In these areas, the number of trapping structures can be counted, and the average can be determined. The same can also be done with respect to the areas 9-16, which are provided in the eight sectors of the central circle of 7.1 cm radius on the petri dish. The present inventors observed that, when cultivating a strain of an embodiment on water agar, less trapping structures will generally be formed in the central circle of the petri dish and substantially more in the peripheral annulus. The reason for this difference may be explained from the fact that the petri dish is inoculated in the center. When inoculating the petri dish, nutrients are generally transferred from a pre-culture into the nutrient-free water agar. As a consequence, there may be some nutrients in the petri dish containing the water agar. These nutrients will generally start diffusing from the center towards peripheral parts of the petri dish. It is expected that, in the peripheral parts, there will most of the time be less nutrients than in the center. The presence of nutrients, however, seems to inhibit the formation of trapping structures in the strains of the invention, which is why the highest number of trapping structures is found in the peripheral annulus of the petri dish.

From the above one can see that, in an embodiment, the *D. flagrans* strain of the invention does not require the stimuli of a natural environment, such as provided by the feces of a grazing mammal, nematodes, and/or another environment providing stimuli for producing trapping structures. In an embodiment, the *D. flagrans* strain of the invention distinguishes from previously reported strains that it produces readily trapping structures in the presence of a medium poor in nutrients.

In an embodiment, referring in particular to the peripheral annulus of a petri dish as shown in Fig. 1, the *D. flagrans* strain of the invention produces on average 20 or more, preferably 30 or more, more preferably 40 or more, and most preferably 50 or more trapping structures per cm² of substrate surface, when grown in a petri dish of 8.6 cm diameter containing 20 ml of 1.6wt.% water agar.

In an embodiment, the *D. flagrans* strain of the invention, when grown for 11-14 days at 22°C, preferably for 12-14 days and most preferably 13 days, on solid substrate poor in nutrients containing 20 ml pure water and 1.6 wt.% agar in a petri dish of 86 mm diameter, produces on average 30 or more trapping structures per cm² in the peripheral 1.5 cm annulus of the petri dish. Preferably, the *D. flagrans* strain produces on average 50 or more, more preferably 60 or more, and most preferably 80 or more trapping structures per cm² in the peripheral 1.5 cm annulus of the petri dish.

In an embodiment, for determining the density of trapping structures, the protocol in Example 1 below is applied, in particular set out under no ii. (2) and (3) in Example 1.

In a preferred embodiment, the *D. flagrans* strain of the invention is the strain CBS 138751, deposited on September 1, 2014 in accordance with the Budapest Treaty (Budapest Treaty on the International Recognition of the Deposit of Microorganisms for the Purposes of Patent Procedure, done at Budapest on 28 April 1977) at the "Centraalbureau voor Schimmelcultures" (CBS), Uppsalalaan 8, 3584 CT Utrecht, Netherlands.

In the present examples, the strain CBS 138751 produces roughly an average of 120 trapping structures per cm² in the peripheral annulus of the petri dish.

In an embodiment, referring in particular to the peripheral annulus of a petri dish as shown in Fig. 1, the *D. flagrans* strain of the invention produces on average 60 or more, preferably 75 or more, more preferably 85 or more, and most preferably 100 or more trapping structures per cm² of substrate surface, when grown in a petri dish of 8.6 cm diameter containing 20 ml of 1.6wt.% water agar.

In an embodiment, the *D. flagrans* strain of the invention is capable of producing, when grown under nutrient depleted conditions on a solid substrate, the numbers of trapping structures per cm² as specified above. In an embodiment, the *D. flagrans* strain of the invention is capable of producing 40 or more, 50 or more, 60 or more, 70 or more, 80 or more, 90 or more, 100 or more, and even 110 or more trapping structures per cm² of solid substrate.

Remarkably, previously reported *D. flagrans* strains produce generally less than 20, less than 10, less than 5 or even less than 1 trapping structure per cm² of solid substrate when grown under nutrient depleted conditions as set out in this specification.

In some embodiment, the invention provides a method for selecting nematophagous fungal strains having improved nematode trapping properties, strains producing increased numbers of trapping structures and/or strains exhibiting the phenotype as described elsewhere in this specification.

The selection method preferably comprises the step of inoculating a medium poor in nutrients with a nematophagous fungal strain. The medium poor in nutrients is preferably as defined elsewhere in this specification, for example a water agar as described. Of course, other mediums containing little or no nutrients for the fungus may be used as well. Preferably, the medium is a solid medium or substrate.

The selection method preferably comprises the step of cultivating the inoculated medium at a temperature conducive for growth of fungal mycelium for a time sufficient for the production of trapping structures by the fungus. Conditions that are conducive to the growth of fungal mycelium are described elsewhere in this specification. For example, the temperature may be in the range of 20-25°C and the humidity is such that growth is not slowed down due to lack of water. Preferably, the solid medium on which the nematophagous fungal strain grows does not become desiccated during the step of cultivating the strain. As described elsewhere, when grown for 10-15 days, for example 13 days, at 22°C, the strains have produced trapping structures, and the selection may be conducted on the basis of the number of trapping structures produced.

The selection method preferably comprises the step of selecting fungal strains on the basis of the number of trapping structures or on the number of clusters of trapping structures formed by the fungus on the macronutrient deprived medium. The selection may also be made on the basis of the number of trapping rings observed.

Preferably, the assessment of the number, preferably the average number of trapping structures, clusters or rings is made in a reproducible manner, for example under comparable conditions, for example using a segmented petri dish as shown in Figure 1 and as described elsewhere in this specification.

The strain CBS 138751 has also been genetically analyzed and it was found that the strain can preferably be genetically distinguished from all other *D. flagrans* strains that were tested and which lack the phenotype of CBS 138751.

When producing RAD (restriction site associated DNA) sequencing fragments with genetic material of CBS 138751 and comparing the fragments with seven other *D. flagrans* strains, 22 single-nucleotide polymoiphisms (SNPs) were found.

In an embodiment, the *D. flagrans* strain of the present invention is a strain that comprises at least one, preferably at least 2, more preferably at least 3, 4, 5, 6, 7, 8, 9, or 10 of the SNPs indicated in Table 2 further below.

In several cases, two SNPs were found in vicinity, in particular within the same fragment or stretch encompassing 120 continuous nucleotides. As can be seen from Table 1, five (5) sequence stretches of 120 continuous nucleotides contain two SNPs.

In an embodiment, the *D. flagrans* strain of the present invention is a strain that comprises at least 1-5, preferably at least 1-4 stretches on 120 nucleotides with two SNPs compared to previously described strains, as indicated in Table 1.

In an embodiment, the DNA of the *D. flagrans* strain of the invention comprises a sequence selected from any one or more of SEQ ID NOs 1 to 9 and 11 to 18, preferably any one or more of SEQ ID NOs 1 to 5, and most preferably SEQ ID NO: 1.

In an embodiment, the DNA of the *D. flagrans* strain of the present invention comprises the nucleotide sequence as shown in SEQ ID NO: 1. In an embodiment, the *D. flagrans* strain of the present invention comprises the mutation and/ or SNPs T88C and/or A92G shown in SEQ ID NO: 1, when compared to SEQ ID NO: 19.

In an embodiment, the DNA of the *D. flagrans* strain of the present invention comprises the nucleotide sequence as shown in SEQ ID NO: 2. In an embodiment, the *D. flagrans* strain of the present invention comprises the mutation and/or SNPs A8G and/or G103A shown in SEQ ID NO: 2, when compared to SEQ ID NO: 20.

In an embodiment, the DNA of the *D. flagrans* strain of the present invention comprises the nucleotide sequence as shown in SEQ ID NO: 3. In an embodiment, the *D. flagrans* strain of the present invention comprises the mutation and/ or SNPs G12A and/or A18G shown in SEQ ID NO: 3, when compared to SEQ ID NO: 21.

In an embodiment, the DNA of the *D. flagrans* strain of the present invention comprises the nucleotide sequence as shown in SEQ ID NO: 4. In an embodiment, the *D. flagrans* strain of the present invention comprises the mutation /SNPs G8A and/or T66C shown in SEQ ID NO: 4, when compared to SEQ ID NO: 22.

In an embodiment, the DNA of the *D. flagrans* strain of the present invention comprises the nucleotide sequence as shown in SEQ ID NO: 5. In an embodiment, the *D. flagrans* strain of the present invention comprises the mutation A39G and/or G71A shown in SEQ ID NO: 5, when compared to SEQ ID NO: 23.

In an embodiment, the DNA of the *D. flagrans* strain of the present invention comprises the nucleotide sequence as shown in SEQ ID NO: 6. In an embodiment, the *D. flagrans* strain of the present invention comprises the mutation G64A as shown in SEQ ID NO: 6, when compared to SEQ ID NO: 24.

In an embodiment, the DNA of the *D. flagrans* strain of the present invention comprises the nucleotide sequence as shown in SEQ ID NO: 7. In an embodiment, the *D. flagrans* strain of the present invention comprises the mutation C24A as shown in SEQ ID NO: 7, when compared to SEQ ID NO: 25.

In an embodiment, the DNA of the *D. flagrans* strain of the present invention comprises the nucleotide sequence as shown in SEQ ID NO: 8. In an embodiment, the *D. flagrans* strain of the present invention comprises the mutation/SNP A71G as shown in SEQ ID NO: 8, when compared to SEQ ID NO: 26.

In an embodiment, the DNA of the *D. flagrans* strain of the present invention comprises the nucleotide sequence as shown in SEQ ID NO: 9. In an embodiment, the *D. flagrans* strain of the present invention comprises the mutation/SNP G42A as shown in SEQ ID NO: 9, when compared to SEQ ID NO: 27.

In an embodiment, the DNA of the *D. flagrans* strain of the present invention comprises the nucleotide sequence as shown in SEQ ID NO: 11. In an embodiment, the *D. flagrans* strain of the present invention comprises the mutation T88C as shown in SEQ ID NO: 11, when compared to SEQ ID NO: 29.

In an embodiment, the DNA of the *D. flagrans* strain of the present invention comprises the nucleotide sequence as shown in SEQ ID NO: 12. In an embodiment, the *D. flagrans* strain of the present invention comprises the mutation A72C as shown in SEQ ID NO: 12, when compared to SEQ ID NO: 30.

In an embodiment, the DNA of the *D. flagrans* strain of the present invention comprises the nucleotide sequence as shown in SEQ ID NO: 13. In an embodiment, the *D. flagrans* strain of the present invention comprises the mutation C29T as shown in SEQ ID NO: 13, when compared to SEQ ID NO: 31.

In an embodiment, the DNA of the *D. flagrans* strain of the present invention comprises the nucleotide sequence as shown in SEQ ID NO: 14. In an embodiment, the *D. flagrans* strain of the present invention comprises the mutation A80G as shown in SEQ ID NO: 14, when compared to SEQ ID NO: 32.

In an embodiment, the DNA of the *D. flagrans* strain of the present invention comprises the nucleotide sequence as shown in SEQ ID NO: 15. In an embodiment, the *D. flagrans* strain of the present invention comprises the mutation A39G as shown in SEQ ID NO: 15, when compared to SEQ ID NO: 33.

In an embodiment, the DNA of the *D. flagrans* strain of the present invention comprises the nucleotide sequence as shown in SEQ ID NO: 16. In an embodiment, the *D. flagrans* strain of the present invention comprises the mutation T101C as shown in SEQ ID NO: 16, when compared to SEQ ID NO: 34.

In an embodiment, the DNA of the *D. flagrans* strain of the present invention comprises the nucleotide sequence as shown in SEQ ID NO: 17. In an embodiment, the *D. flagrans* strain of the present invention comprises the mutation T34C as shown in SEQ ID NO: 17, when compared to SEQ ID NO: 35.

In an embodiment, the DNA of the *D. flagrans* strain of the present invention comprises the nucleotide sequence as shown in SEQ ID NO: 18. In an embodiment, the *D. flagrans* strain of the present invention comprises the mutation G35A as shown in SEQ ID NO: 18, when compared to SEQ ID NO: 36.

In some embodiments, the present invention provides markers, probes and/or primers for identifying the strains according to embodiments of the present invention. Preferably, the probe and/or the primers comprise nucleotides. In some embodiments, the markers, probes and/or primers comprise nucleotide sequences that specifically bind to a DNA sequence of a the strain according to the invention and which do not bind to DNA of a previously reported *D. flagrans* strain, which does not exhibit the phenotype.

In an embodiment, the probe and/or primers comprise a nucleotide sequence that specifically binds to a nucleotide sequence of any one of SEQ ID NOs: 1-9 and 11-18, or to nucleotides sequences that are complementary to the aforementioned. Preferably, the probe does not bind, under the same conditions, to the respective nucleotide sequence of any one of SEQ ID NOs: 19-27 and 29-36. In particular, the probe binds to one or, if present, two of the SNPs present in these sequences, or in the respective complementary sequences.

In an embodiment, the probe comprises a sufficient number of nucleotides required for enabling binding of the probe by base pairing and for rendering the binding specific to the targeted site in the genome.

Preferably, the probe comprises at least 14, at least 17, more preferably at least 18, even more preferably at least 20 and most preferably at least 20 nucleotides, which are capable of engaging in specific base pairing with a continuous nucleotide sequence stretch of the strain to be identified. In some embodiment, the probe comprises 25 or more nucleotides. The nucleotide sequence encompasses generally one or more SNPs of the strain to be identified. For example, the probe comprises the sequence stretch CGATG, and preferably additional nucleotides contained on one or both sides of the stretch, as disclosed in SEQ ID NO: 1, such to provide a nucleotide sequence having the required length for allowing binding to a sequence targeted by the probe.

The probes and/or primers are preferably "specific", which means that the primer and/or probe binds to a substantially or entirely complementary sequence to be probed and/or amplified. Preferably, the term "specific" indicates that the primer or probe does not bind, under the appropriate conditions, to sequences that are not substantially or entirely complementary to the sequence to be probed or amplified.

The specific nucleotide probe, possibly in combination with other primers or probes, preferably allows determining whether a particular SNP is present in the genome of the strain to be tested. This in turn allows determining whether or not a strain the DNA of which is probed is the strain to be identified.

In an embodiment, the probe comprises a nucleotide sequence selected from the group consisting of: 3'-CGATG-5', CCGATG, CGATGG, CCGATGG, GCCGATG, GCCGATGG, GCCGATGGA, AGCCGATG, AGCCGATGG, AAGCCGATG, CAAGCCGATG (SEQ ID NO: 41), AAGCCGATGG (SEQ ID NO: 42), AGCCGATGGA (SEQ ID NO: 43), GCCGATGGAA (SEQ ID NO: 44), CCGATGGAAG (SEQ ID NO: 45), CGATGGAAGC (SEQ ID NO: 46), and sequences that are complementary to any one of the aforementioned sequences. As indicated above, the probe comprises preferably at least 14, 16, 18, 20, 22 or even 25 or more nucleotides capable of engaging in base pairing at the targeted sequence, and the probe thus preferably comprises additional nucleotides on the 3' or 5' end of the sequences specified in this paragraph, such as to provide a probe that is preferably specific to the strain of the present invention, preferably the strain the DNA of which comprises a the nucleotide sequence of SEQ ID NO: 1. In an embodiment, the invention provides a *D. flagrans* strain which can be probed with a probe comprising any one or more nucleotide sequences selected from the nucleotide sequences indicated above.

The specificity of probes containing relatively few nucleotides, such as, for example, 14 nucleotides, may preferably be increased, for example by providing locked nucleotides such as is the case in an LNA probe. Furthermore, probes consisting of a stretch of as little as 14 continuous nucleotides work well in TaqMan assays, where the specificity is further warranted by the use of primers binding in vicinity (each within 1-100 base pairs) of the 3' and 5' ends of the targeted sequence or SNPs.

Depending on the type of probe used, primers may be required for identifying whether a given strain is the strain to be identified.

In other assays, such as HRM assays, a pair of a forward and a reverse primer, binding up- and downstream, respectively, to a SNP, are used for identifying a *D. flagrans* strain. In an embodiment, primers are used for amplifying a sequence stretch containing the SNP. The amplified sequence may be analyzed for determining whether or not the SNP is present, for example by HRM analysis. For example, for identifying the strain of an embodiment of the invention, any sequence stretch encompassing an SNP, such as those shown in Table 2, may be amplified with appropriate primers in a method for identifying a particular strain.

In an embodiment, the nucleotide sequence of the probe is covalently linked to one or more marker molecule, in particular artificial marker molecule, such as a dye, antibody, peptide tag, fluorescent dye, a quencher. In an embodiment, the marker molecule is covalently connected to a terminal nucleotide of the nucleotide sequence of the probe.

In an embodiment, the probe comprises one or more chemically modified nucleic acids, such as one or more "locked" nucleic acids, for example, if the probe is a LNA (locked nucleic acid) probe. In an LNA probe, the ribose moiety of a nucleotide is modified with an extra bridge (covalent bond) connecting the 2' oxygen and 4' carbon. In such an embodiment, the probe may be covalently linked to a dye on one end of the nucleotide sequence and to a quencher on the other side of the nucleotide sequence.

In an embodiment, the *D. flagrans* strain of the invention comprises DNA which can be probed with a probe in accordance of the invention.

In an embodiment, the *D. flagrans* strain of the invention comprises DNA which can be probed with a probe comprising the nucleotide sequence as indicated above, such as of any one of SEQ ID NOs: 41-46, or a sequence that is complementary to this sequence, under conditions conducive to binding of a nucleotide probe.

In an embodiment, the *D. flagrans* strain of the invention comprises DNA which can be probed with a probe comprising the nucleotide sequence of SEQ ID NO: 37, or a sequence that is complementary to this sequence under conditions conducive to binding of a nucleotide probe.

In an embodiment, the DNA of the *D. flagrans* strain of the invention can be probed with a probe comprising the nucleotide sequence of SEQ ID NO: 37, under conditions conducive to binding of a nucleotide probe.

In an embodiment, the DNA of the *D. flagrans* strain of the invention does not bind to a probe comprising the nucleotide sequence of SEQ ID NO: 38, under conditions conducive to binding of a nucleotide probe.

The present invention encompasses the use of probes such as those disclosed in this specification for identifying a *D. flagrans* strain according to the present invention.

Furthermore, invention encompasses a method for determining whether or not a *D. flagrans* strain is a strain according to an embodiment of the invention, the method comprising the steps of exposing the DNA of a *D. flagrans* strain to a marker or probe under conditions that are conducive to the binding of the probe to the DNA, determining whether binding has occurred, and if there is binding, identifying the strain as a strain in accordance with an embodiment of the invention.

The marker or probe may be any marker or probe that is suitable to identify the *D. flagrans* strain according to the present invention and/or according to an embodiment of the invention. The marker or probe used in the method is preferably a marker or probe as disclosed elsewhere in this specification.

For the purpose of the present specification, conditions that are conducive to the specific binding of a nucleotide probe may be determined by the skilled person. In an embodiment, conditions that are conducive to the binding of a nucleotide probe are conditions that allow annealing of a primer or probe to a single stranded DNA molecule. Such conditions depend on the assay used, on the length of the primer or probe, and so forth. Standard conditions for an exemplary TaqMan assay are set out in Example 3 below.

The present invention also relates to granular formulations comprising nematophagous fungal strains. The formulations are suitable for oral administration and/or uptake by grazing mammals. Preferably, the nematophagous fungal strain is a *D. flagrans* strain, preferably the *D. flagrans* strain of an embodiment of the present invention, for example the *D. flagrans* strain CBS 138751.

The invention also relates to methods for producing the granular formulation in accordance with the invention.

The method for producing a granular formulation preferably comprises the step of cultivating a nematophagous strain on a granulate organic material or substrate so as to obtain biomass comprising fermented organic material intermingled with mycelium of the fungus.

The granulate organic substrate may be selected from cereals, pellets of bran or other organic waste products, waste products from the production of sugar, and from granulates soaked with a nutrient solution, such as disclosed in EP1073738. Granulates based on cereal grains are preferred. For example, the granulate organic material is whole cereal grains, such as barley, wheat, spelt triticale and/or oat cereal grains, for example. In a preferred embodiment, the cereal grains are rolled cereal grains, such as rolled barley, wheat, spelt, triticale and/or oat cereal grains.

Fungal chlamydospores are considered to be included as part of the mycelium in the expression "biomass comprising fermented organic material intermingled with mycelium of the fungus". In case of cereal grains, the biomass comprises fermented cereal grains intermingled with mycelium of the fungus.

In this specification, the expression "biomass" is used to refer to the biomass comprising fermented organic material, such as cereal grains, intermingled with mycelium of the fungus, unless it is specifically referred to fungal biomass, which means biomass of fungal mycelium only.

Preferably, the organic material is inoculated with the fungus, and the fungus is incubated under conditions favoring the growth of the strain. Preferably, the fungal strain is cultivated by solid state fermentation, for example in a solid state fermenter and/or according to a method as disclosed in EP 1073708. The fungal strain is preferably cultivated until the metabolic activity starts to decrease, which is an indication that nutrients have been used up and the fungal biomass will no longer increase significantly. Preferably, the fungal strain is cultivated until a high or a maximum number of chlamydospores are produced. High numbers of chlamydospores are generally produced once the metabolic activity has started decreasing. For example, a high number of chlamydospores can be found 1 to 3 days after the metabolic activity has started decreasing in a persistent manner.

It is noted that the granulate organic material, such as the cereal grains that were used as the original substrate have generally, after the cultivating step, to a large extent disintegrated. The granulate organic material has lost its original shape, granularity and/or consistency. The biomass comprising fermented granulate organic material intermingled with mycelium of the fungus can be regarded as a more or less homogenous mass that will be further processed as a whole in subsequent process steps. At this stage, the process of the invention preferably lacks a step of separating fungal chlamydospores and/or mycelium from the fermented substrate. Such as separation step would be time and cost intensive and is therefore preferably avoided in accordance with the present invention.

In some embodiments, the biomass comprising fermented granulate organic material, such as cereal grains, intermingled with mycelium of the fungus is subjected to a drying or partial drying step. In particular, it may be advantageous for the subsequent processing to reduce the water content of the biomass for improving its processibility.

The drying step is optional as it depends on the quantity and type of filler or matrix agents that will be added and on the quantity of the biomass in the final product. In some embodiments, the drying step is not necessary, and the biomass obtained after fermentation maybe further processed as such. In other embodiments, the biomass is subjected to partial water removal and/or drying.

The method for producing a granulate formulation preferably comprises the step of mixing the biomass with at least one filling material or filler. The filling material may be an ingredient that provides fiber, such as dietary fiber, bulk, or other purposes, including nutritive and/or non-nutritive purposes. As a filler, a waste product or derivative of the food and/or feed industry may be used.

In an embodiment, the filler comprises a polymeric material, such as a material comprising carbohydrates, for example sugars and/or polysaccharides. The filler may also comprise proteins. Preferably, the filler comprises a natural and readily available product.

In a preferred embodiment, the filler comprises or consists essentially of carob flour or carob pod flour. Carob flour is prepared from locust pods or pulps. Carob flour is not to be confused with locust bean gum, which comes from the bean inside the pod. Carob flour is obtained from deseeded carob pods.

The use of carob flour as a component of the granulate formulation provides several advantages. First, the carob flour fulfills the role of a filler, providing bulk material to the formulation. Second, carob flour has excellent binding, gluing and/or lubricating properties, making it possibly to produce a granulate from the biomass mixed with carob flour, even if no further ingredient, such as a binder, is added to the formulation. The carob flour thus improves the processibility and facilitates the granulation steps. Third, the carob flour is appreciated by the grazing animals to which the granules are fed. The carob flour increases the taste and the granules containing the carob flour can be offered as such (in the absence of feed, for example), in pure form. Granules comprising carob flour are readily consumed by the animals. The use of the carob flour makes sure that the amount of the formulation that is offered to an animal is consumed entirely. In addition, the carob flour is found to work as an appetizer. If mixed with animal feed, grazing animals, in particular ruminants, more willingly consume the animal feed. The granules containing the carob flour improve the acceptance of the feed.

In some embodiments, the method for producing a granulate formulation comprises the step of adding a binder to the biomass. Accordingly, the biomass may be mixed not only with a filler, but also with a binder. The binder preferably has the purpose of rendering the mixture suitable for producing granules. In an embodiment, the binder is or comprises a gelling agent or thickening agent. Gelling agents have the further advantage that they bind water. Accordingly, if a gelling or thickening agent is added, the step of partially drying the biomass may be omitted. Thickening agents that may be used as additives to animal feed are known to the skilled person. Thickening material may be selected, for example, from polysaccharides, such as starches, vegetable gums, and pectin, or proteins (such as gelatin, for example).

In an embodiment, the filler and the binder are the same ingredient. For example, as indicated above, carob flour functions as a filler and at the same time as a binder. Other ingredients, may be available that have binder properties. Waste products or derivatives from food and/or feed industry may be used as binders, and possibly also as fillers.

Preferably the filler is mixed with the biomass, so as to obtain a homogenous mass, such as dough, that can be processed to granules.

The mixture obtained by mixing the biomass and with a filler, for example carob flour, and optionally additional ingredients, such as thickeners, desiccating agents, binders, possibly nutrients, and the like, is preferably processed to granules. This may be done by extrusion. On lab scale, extrusion may be performed using a meat chopper. On larger scales, a commercially available extruder may be employed. Preferably, the conditions of extrusion (pressure, temperature) are such that the fungus survives the extrusion step.

The extrusion is preferably adjusted such that granules having a mean volume of > 1 mm³ are obtained. The mean is preferably the arithmetic mean volume. In an embodiment, the granules have a volume of ≥ 1 mm³ up to 2.00 cm³, preferably 1.5 mm³ up to 1.00 cm³, more preferably 2 mm³ up to 0.7 cm³, most preferably 3 mm³ up to 0.5 cm³.

In an embodiment, the granulate formulation is characterized in that the granules or particles of the invention have preferably an average particle weight in the range of 0.5 mg-2 g. For the purpose of the present specification, the "average" or "mean" is the arithmetic mean. In a preferred embodiment, the granules of the formulation of the invention have preferably a mean particle weight in the range of more than 0.7 mg and less than 1 g per particle. More preferably, the mean particle weight is in the range of 1-100 mg, even more preferably 1.5-50 mg, and most preferably 2-20 mg. In an embodiment, the particles have an average particle weight of 1-15 mg.

The invention also concerns a feed comprising the granulate formulation of the invention. The feed is preferably a concentrated feed. The granulate formulation is preferably added as a supplement to the feed. Preferably, the feed is a feed for grazing mammals, preferably domestic grazing animals. Preferably, the grazing mammals are as specified elsewhere in this specification.

The granulate formulation is preferably added such that it amounts to 0.1 to 10 wt.% of the feed including the formulation. Preferably, the granulate formulation is added at amounts of 0.5 to 7 wt.%, more preferably 1-5 wt.%, most preferably 2-4 wt.%.

The invention further relates to methods for controlling the spread of parasitic nematodes, in particular of nematodes infecting grazing mammals. The invention in particular relates to methods for reducing the spread of nematodes infecting the gastrointestinal tract of grazing mammals.

The present invention encompasses in particular domestic grazing mammals, but in some embodiments the grazing mammal is a deer, for example kept within a confined area. Examples of grazing mammals are cattle, sheep, goats, camelids, and horses.

The invention also relates to the use of *D. flagrans* strains of the invention for controlling the spread of parasitic nematodes. The methods and uses of the invention are preferably biological control methods. In an embodiment, the invention provides the strains of the invention for controlling the parasitic nematode populations in excrements of grazing mammals.

The parasitic nematodes the spread of which is to be reduced are preferably parasitic nematodes of the orders and families Strongylida, Strongylidae, Trichostrongylidae and Cyathostominae including the nematodes such as *Ostertagia ostertagi, Cooperia oncophora,* and *Strongylus vulgaris*.

The methods of the invention comprise administrating the *D. flagrans* strains of an embodiment of the invention to an animal, in particular a grazing mammal as specified above. The animal is preferably a herbivore that spends at least some time on grassland for grazing.

The *D. flagrans* strains of the invention are preferably not used for directly treating infections of parasitic nematodes in their host. The *D. flagrans* strains of the invention actually capture and kill nematodes that emerge from eggs contained in the feces of the grazing animal that was fed with the *D. flagrans* strains of the invention. Accordingly, the method of the invention reduces the spread of parasitic nematodes from infected animals. The method of the invention in particular interferes in the life cycle of parasitic nematodes by reducing the number of nematodes that migrate, generally under moist conditions, from the feces onto the herbage. Preferably, the methods of the invention reduce the occurrence of infective L₃ stage larvae on grassland. Preferably, the methods of the invention reduce the uptake of L₃ stage larvae by herbivores during grazing on grassland.

In some embodiments, the invention envisages combining the administration of the *D. flagrans* strains of the invention and/or the formulation of the invention with treatment of infected animals with an anthelminthic, for example an anthelminthic of synthetic origin. In particular, in case of an animal showing signs of infection by a parasitic nematode, the treatment of the infection by administration of an anthelminthic is recommended. The combination of the biological control method of the invention with the use of an anthelminthic for the prophylactic or acute treatment of helminth infections is particularly efficient for reducing the occurrence of future infections in grazing animals.

### EXAMPLES

### Example 1: Selection procedure for identifying D. flagrans strains in accordance with the invention

### i. Strains

Several strains were screened using the protocol below for identifying *D. flagrans* strains producing increased amounts of trapping structures. Two strains were obtained from "Centraalbureau voor Schimmelcultures" (CBS), Uppsalalaan 8, 3584 CT Utrecht, Netherlands (CBS 143.83 and CBS 393.93) and *D. flagrans* strain FTHO-8 has been described previously by N.F. Ojeda-Robertos et al. in in Journal of Helminthology; Volume 79, Issue 02, June 2005, pp 151-157.

The strain P14, which was identified as having a particular phenotype producing a significantly increased number of trapping structures, has been deposited at CBS under no. CBS 138751 on September 1, 2014, in accordance with the Budapest Treaty.

### ii. Method for identifying the phenotype of D. flagrans strains in accordance with the invention

### (1) Starting culture for cultivating D. flagrans strains

*D. flagrans* strains were grown on PDA (potato dextrose agar, Carl Roth, Karlsruhe, Art. no. X931.1) at 21 - 25°C by sub cultivation every 2-3 weeks.

### (2) Selection cultures

Discs of 5 mm diameter and 3.6 mm height were cut with a cork borer at the etch of growing *D. flagrans* cultures 3-5 days after sub cultivation of step (1) above and placed in the centre of a petri dish (diameter: 86 mm, height: 12 mm) containing 20 ml of 1.6% water agar (16 g agarose, Carl Roth, Karlsruhe, Art. no. 5210.3 in pure water, ELGA Purelab flex (purity type 2)). After 13 days (312 hours) incubation at 23°C±1°C and 60-100% relative humidity, eight squares of 1 cm² each, see Figure 1, in the distal 15 mm annulus parts of each plate were searched with a stereomicroscope for presence of trapping nets. One trapping net is characterized by the presence of three hyphal loops or rings. The trapping nets appear in clusters along hyphae (Figures 2A and 2B) and which arise three-dimensionally above the agar surface (Figure 2B).

The culture medium (agar in pure water) used for selecting for a particular phenotype in step (2) was free of any nutrients and is thus referred to herein as nutrient-depleted or poor in nutrients. It is noted that some nutrients were brought into the culture by way of the disk of 5 mm taken from the sub-culture medium under step (1). It is thus expected that a nutrient gradient is formed in step (2) at the beginning of the culture period, with higher nutrient concentration in the center, where the 5 mm disk has been placed, and lower nutrient concentrations towards the outer areas of the petri dishes. This gradient might explain why the phenotype of increased number of trapping nets is found more pronouncedly in the outer perimeter of the petri dish.

The incubation at 23°C takes preferably place in an incubator. Petri dishes were placed in a plastic box allowing air exchange with the outside. The agar remained humid throughout the culturing period.

### (3) Counting of trapping structures

The squares of 1 cm² were arbitrarily chosen. They were predefined on a raster as shown in Figure 1 and then placed on the petri dish for counting trapping nets within the squares.

For counting the trapping structures in each 1 cm² area, a stereomicroscope was used (Leica M205 C). 50x magnification was used for getting an overview. For analysing the details, such as counting individual loops in clusters of trapping structures, a 150x magnification was used. One trapping structure generally consists of three characteristically arranged trapping rings.

### iii. Results

The *D. flagrans* strain P14 (CBS 138751), when grown on the nutrient poor medium (step (2) above) started distinguishing clearly as from about day 11-12 from all other phenotypes with respect to the number of trapping nets produced under these conditions. Basically, all strains produced chlamydospores but except P14 no trapping nets. P14 is unique in that this strain produced both, chlamydospores and high numbers of trapping nets.

After about 15 days, P14 started producing chlamydospores also around the trapping structures rendering the counting of the trapping structures more difficult, even though P14 clearly has more trapping structures also after 15 days.

Table 1 shows the numerical outcome of the selection procedure in accordance with the invention.

**Table 1: Number of trapping nets per cm² of D. flagrans strains cultivated in water agar plate.**

| *D. flagrans* Strain | Arithmetic mean and standard deviation of trapping structures/cm² | |
|---|---|---|
| | Squares 1-8 (Fig. 1) | Squares 9-16 (Fig. 1) |
| P14 | 121 +/- 21 | 22 +/- 10 |
| CBS 143.83 | <1 | <1 |
| CBS 393.94 | <1 | <1 |
| FTHO-8 | <1 | <1 |
| K11-6 | <1 | <1 |
| K21-3 | <1 | <1 |
| K25-3 | <1 | <1 |
| K33-05 | <1 | <1 |

In conclusion, in this particular system two distinct phenotypes could be observed: On the one hand the P14 (Figures 2A and 2B) phenotype producing abundantly trapping nets and chlamydospores and on the other hand the phenotype of all other so far studied isolates of *D. flagrans* producing chlamydospores but no trapping nets (Figure 2C).

### Example 2: Genetic identification of the P14 strain by RAD sequencing

Genomic DNA of strain P14 and of other *D. flagrans* strains found in Switzerland and two CBS reference strains were digested with restriction enzymes EcoRI Starting from each digestion site 120 bp were sequenced with Illumina Nextseq System in both directions and sorted and aligned with bioinformatics tools resulting in about 7000 sequences per strain. For strain P14, seventeen (17) of these 120bp sequences had at least one unique SNP (Single Nucleotide Polymorphism) (Table 2). Each of these SNPs, or a combination of two or more of these SNPs is suitable for discrimination of strain P14 from all other *D. flagrans* isolates. SNPs in P14 and the corresponding nucleotide as found in all other strains are shown underlined and in bold in Table 2.

**Table 2: RAD sequences with unique SNPs specific for D. flagrans strain P14.**

| **SEQ ID NO** | **P14 (5'-3')** | **SEQ ID NO** | **All other *D. flagrans* strains (5'-3')** |
|---|---|---|---|
| 1 | | 19 | |
| 2 | | 20 | |
| 3 | | 21 | |
| 4 | | 22 | |
| 5 | | 23 | |
| 6 | | 24 | |
| 7 | | 25 | |
| | | | |
| 8 | | 26 | |
| 9 | | 27 | |
| 11 | | 29 | |
| 12 | | 30 | |
| 13 | | 31 | |
| 14 | | 32 | |
| 15 | | 33 | |
| 16 | | 34 | |
| | | | |
| 17 | | 35 | |
| 18 | | 36 | |

Five of the RAD fragments in Table 2 contain two SNPs (SEQ ID NOs:1-5) compared to the corresponding sequences (SEQ ID NO: 19-23). The RAD fragment of SEQ ID NO: 1 comprises two SNPs that are separated by only three nucleotides. In subsequent examples, the SNPs in SEQ ID NO: 1 are used for preparing an assay for genetically identifying the P14 strain.

### Example 3: P14 strain specific assay using fluorogenic LNA probes (TaqMan assay)

Fluorogenic Locked Nucleic Acid (LNA) probes or High Resolution Melt (HRM) analysis were based on the RAD fragment of SEQ ID NO: 1. Sense primer and antisense primers (with grey background) are identical, but LNA hybridizing probes are specific for P14 or all other *D. flagrans* strains. The LNA probes contain, respectively, the FAM or ROX fluorophore, linked via the probe nucleotide sequence to a quencher. Upon binding of the probe and release of the quencher due to 5'-3' exonuclease activity of the Taq DNA polymerase during PCR, the probe will produce a fluorescent green or orange signal, respectively, allowing thereby identifying the strain. This type of assay is generally known as TaqMan assay. LNA-probe P14: FAM-**ctcaagcCGatGga**-BHQ1 SEQ ID NO: 37
LNA-probe other strains: ROX-**acactcaagGTGatAga**-BHQ2 SEQ ID NO: 38

In the two LNA probes shown above, bases indicated with capital letters are modified LNA-modified (locked) bases (http://www.exiqon.com/lna-technology), for increasing binding specificities. Abbreviations: FAM, ROX are fluorescent dyes; BHQ1, BHQ2 are quenchers suppressing the fluorescence of dyes in an intact probe.

The binding region of the LNA probe for the other strains is longer by three nucleotides compared to the one of the P14-specific probe in order to achieve identical melting temperatures for the two probes with respect to their respective target sequences. The C and G nucleotides at the SNP sites in P14 have stronger binding than the T and A nucleotides of the other strains.

DNA was extracted from fungal cultures grown on PDA using commercial kits such as the Fungal/Bacterial DNA MiniPrep™ (Cat. # D6005, ZymoResearch Corp. Irvine, USA) yielding typically 100-200 ng genomic DNA per microliter. One microliter of each DNA extract was tested in a total of 10 microliter containing 300 nM each of sense and antisense primers, 100 nM each of both probes (*D. flagrans* general and *D. flagrans-*P14) and 5 microliter of KAPA Probe Fast qPCR hotstart Mastermix 2x (Cat. # KK4703, Kapa Biosystems, Inc.). FAM and ROX signals were recorded real-time with green (excitation: 460 nm, detection: 510 nm) and orange channel (excitation: 585 nm, detection: 610 nm), respectively, after each annealing/elongation step in a 72 well rotor (Rotorgene Q, Qiagen) during 40 cycles in a two-step protocol of 3 s at 95°C (denaturation) and 20 s at 60°C (annealing/elongation) after an initial step of 3 min at 95°C for activation of the hot start DNA polymerase.

Figures 3 A and 3 B, respectively, show measured fluorescence of DNA extracts of Df strain P14 or other Df strains in dependence of the number of PCR cycles. Figure 3 A shows the signal producing sigmoid curves confirming the presence of the P14 strain (red curves, "1") detected with the green filter, whereas the orange signals (blue curves, "2") stayed below the threshold value. On the other hand, in Figure 4 B, the measured signal with the orange filter is the result of the binding of the LNA probe with DNA extracts of other strains, producing sigmoid curves (marked in blue) as the number of PCR cycles increases whereas the strain P14-specific signal (red curves) stayed below the threshold value.

### Example 4: High Resolution Melt (HRM) analysis based on SNPs of P14

HRM analysis based on the RAD fragment of SEQ ID NO: 1 is conducted using the primers shown in Example 3 (SEQ ID NOs: 39 and 40). No LNA probe is necessary for this analysis. After obtaining double stranded DNA by way of PCR, the melting temperature is detected by way of a intercalating fluorescent dye (EvaGreen®) binding to double stranded DNA and producing a fluorescent light signal only when bound to the double stranded nucleotide sequences. Under condition of stepwise increasing temperature, the dye stops emitting a fluorescent signal when double-strands of DNA are dissociating, and the melting temperature can be recorded (as peak of the first derivative of dF/dT).

Method: One microliter of each DNA extract (see Example 3 above) was tested in a total of 10 microliter containing 300 nM each of sense and antisense primers and 5 microliter of KAPA HRM Fast Mastermix 2x (Cat. # KK4203, Kapa Biosystems, Inc.). The fluorescence of double stranded DNA with the intercalating dye Eva Green was recorded real time with the HRM channel (excitation: 460 nm, detection: 510 nm) after each annealing/elongation step in a 72 well rotor (Rotorgene Q, Qiagen) during 40 cycles in a two-step protocol of 3 s at 95°C (denaturation) and 20 s at 60°C (annealing/elongation) after an initial step of 3 min at 95°C for activation of the hot start DNA polymerase. After these 40 amplification cycles, the dissociation of the double stranded DNA was recorded with the HRM channel as decrease of fluorescence during a step-wise increase (0.1°C every 2 sec) of temperature from 75 to 88°C and depicted as first derivative (dF/dT) in Fig. 4.

The results of HRM analysis conducted with P14 and other strains can be seen in Figure 4, which shows dF/dT as a function of the melting temperature. In particular, Figure 4 shows the change of the fluorescence as a function of the temperature expressed as first derivative. At the peaks in the graph, fluorescence diminishes rapidly, which indicates the melting temperature. At the end, when fluorescence is 0 or close to 0, no change in fluorescence is detected any more. In Figure 4, reference numeral 1 indicates the red curves obtained with samples containing the P14 strain, whereas reference numeral 2 indicates blue curves obtained with samples containing different strains reported from the prior art, as indicated in Table 1 (Example 1).

The difference in two bases of the amplified fragment resulted in a P14 strain specific increase of 1.3-1.5°C in melting temperature, that is a melting temperature of about 82.75±1°C, compared to 81.0±1°C for the prior art *D. flagrans* strains.

In conclusion, the strain P14 in accordance with an embodiment of the invention can be identified using strain specific nucleotide probes or other molecular tools such as HRM analysis, in particular thanks to the SNPs that differentiate the strain from previously known strains.

### Example 5: Preparation of a formulation comprising the strain P14

*D. flagrans* strain P14 (CBS 138751) is grown by solid state fermentation on rolled cereals. The fermentation is conducted in a solid state fermenter as disclosed in EP1073708, Figs 1 and 2 and in accordance with Example 1 of this document, for 19 days at 21-22°C.

The cultivation leads to a fermentation product containing the remainders of the original cereals, as well as the fungal mycelium including chlamydospores. The overall biomass comprises thus nutrient depleted cereal grains intermingled with mycelium of the *D. flagrans* fungus.
When taken from the fermenter, the biomass is estimated to have a water activity of about 0.8. The biomass was exposed to a drying treatment for reducing the water content.

The partially dried biomass was mixed with carob flour (Carob Bio hell, supplied by A2 Trading GmbH, Hamburg, Germany) at weight ratios of 70wt.% biomass and 30wt.% carob flour to form a dough mass having an estimated water activity of 0.7.

The dough is extruded through a meat grinder. Longitudinal rods of about 1 mm thickness exit at the orifice of the grinder and immediately break in pieces having about 1-5 mm length.

The collected to particles are subsequently fluidized-bed dried to have a final dry matter content of 93wt%.

The dried particles contain, with respect to non-aqueous ingredients, 50wt.% of carob flour and 50wt.% of biomass including the fungus and the fermentation left overs originating from the original grains. The final formulation contained 1-3 x 10⁷ chlamydospores per kg dry weight of the formulation.

200 particles were weighted for determining the mean particle weight, which turned out to be 4.4 mg. The minimum and maximum weights measured were 1.2 mg and 19.2 mg, respectively. The standard deviation and the median were 2.3 mg and 3.85 mg, respectively. 80% of the particles were in the range of 2.4-6.8 mg. This form of administration was also very well accepted by the animals.

### Example 6: Administration of the granulate additive to ruminants

The particles obtained in Example 5 were orally administered to cattle and sheep. The particles could be fed directly and were readily consumed by the animals, who apparently appreciated the taste of particles.

In another administration scheme, the particles of Example 5 were administered by mixing it with a concentrate feed (Kälber-Aufzucht Kombi Proflex HK, supplied by Mühle Alb. Lehmann Bioprodukte AG, Birmenstorf, Switzerland) at a ratio (w/w) of 1/28 (3.5wt% particles, 96.5% feed concentrate).

### Example 7: In vivo study

The particles obtained in Example 5 were orally administered to calves (between 163 and 216 kg life weight [LW]) carrying patent infections with gastro-intestinal nematodes (*Cooperia oncophora*). One calf excreting 750 helminth eggs per gram feces [EpGs] obtained the particles at 1 x 10⁶ chlamydospores [chls]/ kg LW as a single dose. Another calf (EpG 617) remained untreated. Bulk faecal sampling of each calf took place at 18h post chls administration. The bulk faecal sample of each animal was used for the preparation of quantitative coprocultures [qCC] (30g faecal material incubated to allow development of helminth eggs into infective larvae) as originally described by the Ministry of Agriculture, 1986 (Third Edition), modified by Paraud et al., 2007 and Waghorn et al., 2003 and further developed by the applicant. Of each bulk sample qCCs (containing wood shavings as an additive) were set up in 8 replicates at 22°C under dark storage conditions for 12 days. Infective larvae were then extracted from the qCCs by means of a Baermann apparatus (Graeff Teixeira et al., 1997; Ministry of Agriculture, 1986). Twelve hours post baermannisation, the totality of larvae were recovered from the Baermann apparatus. The procedure was repeated separately for every qCC. The larvae recovered from every single qCC were stored separately. Larval suspensions were adjusted to 5 ml in order to obtain equal volumes between qCCs. *C. oncophora* L3 larvae were counted (light microscope, 100-x magnification) in an aliquot of 0.5 ml of every qCC and counts were extrapolated to the total qCC volume.

EpGs determined before the setup of qCCs were used to calculate the EpG of the qCCs. For example, a bulk faecal sample with an EpG of 725 means that the qCCs prepared from 30 g of that faecal material carry 21'750 eggs (30 g x 725). Under the assumption that each egg results in an infective larva, the larval number recovered from qCCs would also be 21'750. In fact, the development success as determined in the control qCCs was lower. The actual biocontrol activity of the *D. flagrans* qCCs was therefore compared to the control qCCs.

In this setting, administration of 1 x 10⁶ chlamydospores [chls]/ kg LW resulted in a biocontrol activity of 87±2%; in other words, 87% of the larvae were destroyed compared to control, which is set to contain 100% larvae.

In conclusions, the granulate formulation of the invention is suitable as a biological control agent for reducing the spread of nematode parasites of grazing mammals from feces.

## Claims

1. A *Duddingtonia flagrans* (*D. flagrans*) strain which, when grown on substrate poor in nutrients for 11-14 days at 22°C, produces trapping structures.

2. The *D. flagrans* strain of claim 1, wherein said substrate poor in nutrients is an agar substrate prepared without the addition of nutrients.

3. The *D. flagrans* strain of any one of claims 1 or 2, which produces on average three (3) or more trapping structures per cm² of substrate surface, when grown in a petri dish of 8.6 cm diameter containing 20 ml of 1.6wt.% water agar.

4. The *D. flagrans* strain of any one of the preceding claims, which, when grown for 11-14 days at 22°C on solid substrate poor in nutrients containing 20 ml pure water and 1.6 wt.% agar in a petri dish of 86 mm diameter, produces on average 30 or more trapping structures per cm² in the peripheral 1.5 cm annulus of the petri dish.

5. The *D. flagrans* strain of any one of the preceding claims, wherein, for determining the density of trapping structures, the protocol in Example 1 is applied.

6. A *Duddingtonia flagrans* strain comprising DNA comprising a nucleotide sequence selected from any one of SEQ ID NOs 1 to 9 and/or 11 to 18, preferably any one of SEQ ID NOs 1 to 5, and most preferably SEQ ID NO: 1.

7. The *D. flagrans* strain of any one of the preceding claims, comprising DNA which can be probed with a probe comprising any one or more nucleotide sequences selected from the group consisting of: 3'-CGATG-5', CCGATG, CGATGG, CCGATGG, GCCGATG, GCCGATGG, GCCGATGGA, AGCCGATG, AGCCGATGG, AAGCCGATG, CAAGCCGATG (SEQ ID NO: 41), AAGCCGATGG (SEQ ID NO: 42), AGCCGATGGA (SEQ ID NO: 43), GCCGATGGAA (SEQ ID NO: 44), CCGATGGAAG (SEQ ID NO: 45), CGATGGAAGC (SEQ ID NO: 46), and sequences that are complementary to any one of the aforementioned sequences.

8. The *D. flagrans* strain of any one of the preceding claims, which is the *D. flagrans* strain deposited under deposit number CBS 138751.

9. A method for selecting nematophagous fungal strains having improved nematode trapping properties, the method comprising,
- inoculating a medium poor in nutrients with a nematophagous fungal strain,
- cultivating the inoculated medium at a temperature conducive for growth of fungal mycelium for a time sufficient for the production of trapping structures by the fungus;
- selecting fungal strains on the basis of the number of trapping structures or on the number of trapping rings formed by the fungus on the medium poor in nutrients.

10. A granulate formulation for oral administration to grazing mammals, the formulation comprising:
- *Duddingtonia flagrans* biomass obtained by cultivating *D. flagrans* on a granulate organic material, preferably based on cereal grains,
- a filling material, and,
- optionally, a binder.

11. The granulate formulation of claim 10, which comprises carob flour functioning as said binder and said filling material, and/or wherein said formulation preferably comprises at least 20wt.% of carob flour, said 20 wt% being determined with respect to the non-aqueous components of said granulate formulation.

12. The granulate formulation of any one of claims 10-11, wherein granules of said formulation have a mean weight in the range of 0.5 mg - 1 g.

13. The granulate formulation of any one of claims 10-12, wherein said *D. flagrans* is the strain of any one of claims 1-8.

14. A method for producing a granulate formulation for oral administration to grazing mammals, the method comprising the steps of:
- cultivating *Duddingtonia flagrans* on an organic material, preferably based on cereal grains, so as to obtain biomass comprising fermented organic material intermingled with mycelium of the *D. flagrans* fungus;
- optionally, exposing the biomass obtained in the preceding step to drying step so as to reduce the water content of the biomass;
- mixing the biomass with at least one filling material;
- pressing a mixture comprising the filling material and the optionally dried biomass to pellets.

15. The method of claim 14, wherein said filling material comprises carob flour.

16. The method of any one of claims 14 and 15, which comprises mixing 30-95 wt.% of carob flour with 5-70 wt.% of said biomass, wherein said percentages are determined with respect to the weight of the non-aqueous constituents of said biomass and said carob flour.

17. The method of any one of claims 14 to 16, wherein said pellets have an average weight in the range of 0.5 mg to 2 g.
